# EUROPEAN PATENT APPLICATION

(11) **EP 0 805 181 A1**
(43) Date of publication of application: **05.11.1997**
(21) Application number: 97103572.0
(22) Date of filing: 04.03.1997
(51) Int. Cl.: C08L 67/00, C08L 1/00, C08L 97/00

(54) **Biodegradable molding material based on aliphatic polyester**

(30) Priority: 05.03.1996 JP 78400/96
(71) Applicant: INDUSTRIAL TECHNICAL R&D LABORATORY INC., Takarazuka-shi, Hyogo (JP)
(72) Inventor: Nakamura, Kenichi, Takarazuka-shi, Hyogo (JP)
(74) Representative: Glawe, Delfs, Moll & Partner

(57) **Abstract**

Biodegradable molding material comprising a biodegradable aliphatic polyester resin and a cellulosic pulverulent body, wherein a component ratio of the biodegradable aliphatic polyester resin to the cellulosic pulverulent body is 20:80 to 80:20 by weight. The biodegradable aliphatic polyester resin and the cellulosic pulverulent body are kneaded, extruded and pelletized. The biodegradable moldings are manufactured from the pellets by means of an injection molding machine.

## Description

The invention relates to the biodegradable molding material, in which the speed or rate of the biodegradation is adjustable and the molding material enjoys excellent moldability. The invention also relates to the biodegradable molding material for manufacturing throw-away vegetation pots and food receptacle trays and it is not necessary to recycle the vegetation pots when transplanting such as young plants or nursery trees.

### PRIOR ART

Conventionally, the vegetation pots are manufactured by baking unglazed kaolin or clay. In recent years, however, they are manufactured by molding petrochemical materials such as polyvinyl chloride and polypropylene due to the light-weight and reasonable prices. Also, the food receptacle trays are mainly made of plastics foams such as styrene foam. The vegetation pot after transplanting the young or grown plant therefrom and the food receptacle tray after the use turn into nondegradable waste since the plastics moldings made of the petrochemical materials are durable; that is, the final disposal of waste is a problem.

Further, when disposing conventional packaging materials in an incinerator after the use toxic fumes are generated and high thermal energy produced damages the incinerator. Therefore, these materials are not good for the environment.

On the other hand, a variety of biodegradable resins have been developed in recent years and are used partly. The moldings made of these biodegradable resins have normally the thickness of 0.2 mm to several mm, it takes too long time for the biodegradation like polyethylene vinyl alcohol, the moldability is poor like starch resins, the cost for manufacturing is high, and therefore they are not in practical use yet.

### SUMMARY OF THE INVENTION

Accordingly, it is desirable that the vegetation pot is water-resistant and has an excellent mechanical strength until the young plant has grown up, and after transplanting the pot into the soil the pot must be biodegraded rapidly without exerting harmful influence on the environment. The molding material should have excellent moldability. It is desirable that the food packaging material such as the receptacle tray biodegrades rapidly after the food content is consumed and the material should be reasonable.

It is particularly desirable to fulfill these requirements when transplanting a large number of young cypresses or cedars in a mountain so as to eliminate the cumbersome recycling of nondegradable vegetation pots thereafter and when transplanting a delicate plant such as frangrant daphne, which will not grow if the root is damaged. Also, many food packaging materials are consumed and thrown away in the home every day and it is desirable that these packaging materials rapidly disappear after being thrown away.

Accordingly, it is an object of the invention to provide biodegradable water-resistant molding material having excellent mechanical strength and moldability, in which the biodegradability is readily adjustable so that the young plants can be transplanted into the soil together with the vegetation pot moldings and the food trays biodegrade and disappear within a specific time period after using the foods.

The inventor has been examining the molding material for the vegetation pot so that the material has excellent moldability and mechanical strength, the time period of the biodegradation is adjustable according to the species of the plants, the vegetation pots can be buried into the soil along with the plants when transplanting them, the waste disposal problem does not arise and the vegetation pot does not impede the growth of the plant transplanted and has found that the material obtained by kneading a biodegradable aliphatic polyester resin, which is hereinafter called BDP (biodegradable polymer), and a cellulosic pulverulent body (hereinafter called CP) achieves the object and solves the problem. The biodegradable material is also suitable to food packagings used for short time period. In the biodegradable molding material of the invention, the component ratio of BDP to CP is 20:80 to 80:20.

For example, BDP used in the invention includes polycaprolactone, polylactic acid, lactide/glycollide copolymer, polyhydroxy butyrate/hydroxy butyrate/hydroxy valerate copolymer, butanediol/adipic acid copolymer, butanediol/succinic acid copolymer. For example, CP includes the cellulose fiber obtained by pulverizing pulp, recycled waste paper, grass, leaf and/or straw and the wood powder obtained by pulverizing tree branches and so on. It is preferable that the average size of the powder is 0.01 to 5 mm. It is appropriate that the component ratio of BDP to CP is 20:80 to 80:20 by weight; however, the ratio of 40:60 to 60:40 is preferably used in view of the balance of the biodegradability, moldability and material strength. If the component ratio of BDP to CP is less than 20:80 by weight, the material strength is low and it is difficult to practically use the material as the vegetation pot or food packaging material. On the other hand, if the component ratio of BDP to CP is greater than 80:20 by weight, the biodegradation is too slow for the vegetation pot normally used with the thickness greater than 0.2 mm, which prevents the root of such as the young plant from breaking through the wall of the vegetation pot, thereby preventing the plant from growing after transplanting the plant together with the vegetation pot. It is also disadvantageous since the material cost will be hight. It is also not suitable for the food packaging material expected to disappear for a short time period since the biodegradation is too slow. If the component ratio of BDP to CP is appropriate a suitable amount of such as a lubricant and/or colorant can be added when molding.

With the adjustments for the thickness of the vegetation pot and for the component ratio of BDP to CP the vegetation pot molded with the above mentioned molding material will normally disappear in the soil within one month to one year without polluting the environment. When transplanting such as the young plant by using this vegetation pot the plant can be transplanted together with the vegetaion pot without damaging the root of the plant. Accordingly, not only the successfull rate of the transplantation is high but also it is advantageous to eliminate the cumbersome recycling of the vegetation pot after the transplantation. Since the vegetation pot gradually biodegrades after the transplantation the rooting and growing of the young plant will not be prevented.

On the other hand, when using the material as food packaging material the food content is consumed in a short time period and the packaging material biodegrades and disappears rapidly by the out-door exposure such as to the sun. Therefore, it is not probable that the material will pollute the environment.

### BRIEF DESCRIPTION OF THE DRAWINGS

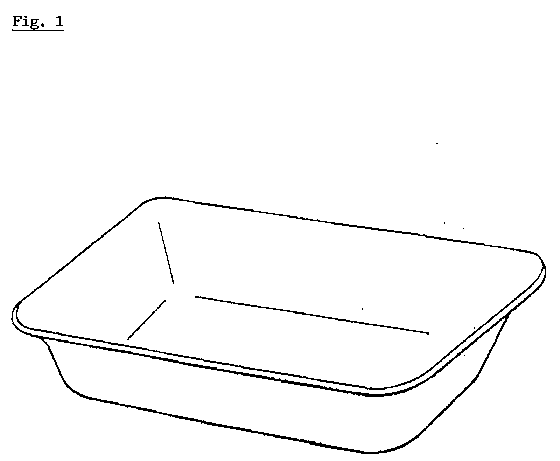

Figure 1 is a perspective view of the biodegradable tray manufactured by the molding material of the invention.

### DETAILED DESCRIPTION OF THE PREFERRED EMBODIMENT

In the biodegradable molding material of the invention, the speed or rate of the biodegradation and the material strength of the molding are adjustable by adjusting the thickness of the molding and the component ratio of BDP to CP, which is between 20:80 to 80:20 by weight. The invention will be described hereinafter with the embodiments; however, the scope of the invention is not restrictive to the embodiments.

### [Embodiment 1]

50 parts polylactic acid pellets (Lacty No. 1000 manufactured by Shimazu Seisakusho of Japan) and 50 parts cellulose powder obtained by pulverizing waste newspaper to a 1 mm size on an average are kneaded at 200°C and re-pelletized: the part being by weight. Vegetation pots having a 10 cm diameter, 10 cm depth and 2 mm thickness are manufactured from the pellets by means of an injection molding machine. Black soil is put into the vegetation pots, cedar seeds are planted and the seeds grow to the young cedars. When these young plants are transplanted in the soil along with the vegetation pots after one year, the vegetation pots biodegrade in the next one year and disappear after two years while the young cedars satisfactorily grow. In the experiment, 30 pots were transplanted and all the young cedars have grown up.

### [Embodiment 2]

60 parts hydroxy butyrate/hydroxy valerate copolymer resin pellets (Bio-ball, manufactured by Zeneca of Japan) and 40 parts wood powder of cedar are kneaded at 180°C and re-pelletized: the part being by weight. Vegetation pots having a 10 cm diameter, 10 cm depth and 2 mm thickness are manufactured from the pellets by means of an injection molding machine. Black soil is put into the vegetation pots and the cuttings of frangrant daphnes are planted therein. After one year the fragrant daphnes take roots and are transplanted in the soil along with the vegetation pots. Further, the vegetation pots biodegrade after two years and disappear after three years while the frangrant daphnes satisfactorily grow. In the experiment, 20 pots were transplanted and all the fragrant daphnes have grown up.

### [Embodiment 3]

40 parts polylactic acid pellets (Lacty No. 1000 manufactured by Shimazu Seisakusho of Japan) and 60 parts virgin pulp are pulverized for obtaining the powder of a 1 mm pass: the part being by weight. The powder is kneaded under heating and compression at 200°C, extruded, hot-cut, re-pelletized. The receptacle tray having a 130 mm width and 180 mm length at the upper edge, 85 mm width and 135 mm length at the bottom portion, 35 mm depth, 0.4 mm thickness and 15 gram weight is manufactured from the pellets by means of an injection molding machine (refer to Fig. 1). When exposed outside the tray biodegrades and disappears in 180 days. According to the biodegradable molding material of the invetnion, the vegetation pot manufactured by molding the material can be used as a normal flowerpot while the young plant grows and can be transplanted together with the young plant by adjusting the component ratio of the biodegradable aliphatic polyester resin to the cellulosic pulverulent body and by making use of the biodegradability of the material. As a result the cumbersome recycling of the vegetation pots can be eliminated and it is advantageous that the material does not pollute the environment since there is no need to dispose in incinerators. Also, the successful rate of the transplantation can be improved since the root of such as the young plant will not be damaged. It is particularly effective when planting cypresses and cedars in a mountain and transplanting such as the young plants whose roots are apt to be damaged. The vegetation pot does not prevent the root of the young plant from growing after the transplantation since the pot biodegrades rapidly after burying the pot in the soil.

Also, the food receptacle tray manufactured by molding the material has the water-resistance and mechanical strength for the short time usage, has well the same effect as the styrene foam trays and will completely disappear approximately in six months as exposed outside after the use. The food packaging material, which does not pollute the environment, can be obtained in place of the conventional plastics packaging materials.

## Claims

1. Biodegradable molding material comprising a biodegradable aliphatic polyester resin and a cellulosic pulverulent body, wherein a component ratio of the biodegradable aliphatic polyester resin to the cellulosic pulverulent body is 20:80 to 80:20 by weight.
